# EUROPEAN PATENT APPLICATION

(11) **EP 4 759 519 A1**
(43) Date of publication of application: **17.06.2026**
(21) Application number: 24894623.8
(22) Date of filing: 20.11.2024
(51) Int. Cl.: B29C 65/18, B29C 65/00, H01M 50/186, H01M 50/105, B29L 31/00

(54) **SEALING APPARATUS AND SECONDARY BATTERY SEALING METHOD**

(30) Priority: 21.11.2023 KR 20230162751
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/018434
(87) International publication number: WO 2025/110731

(57) **Abstract**

A sealing apparatus according to an embodiment of the present disclosure is configured to seal a secondary battery including an electrode assembly, an outer packaging having an internal space for accommodating the electrode assembly and an outer packaging opening through which the internal space is in communication with an outside, and a cover member configured to sealably cover the outer packaging opening of the outer packaging, wherein the sealing apparatus seals the outer packaging and the cover member of the secondary battery, the sealing apparatus including an edge sealing unit configured to seal a plurality of edges between adjacent sealing surfaces among a plurality of sealing surfaces of the outer packaging.

## Description

### TECHNICAL FIELD

### [CROSS-REFERENCE TO RELATED APPLICATION]

The present application claims priority to Korean Patent Application No. 10-2023-0162751 filed on November 21, 2023 in the Republic of Korea, the disclosure of which is incorporated herein by reference.

### [TECHNICAL FIELD]

The present disclosure relates to a sealing apparatus, and more particularly, to a sealing apparatus for sealing an outer packaging of a secondary battery.

### BACKGROUND ART

Secondary batteries have a wide range of applications across different industries and electrical properties having high energy density. Secondary batteries are being used in mobile electronic devices as well as electric vehicles, hybrid electric vehicles or energy storage systems working on electricity. Secondary batteries remarkably reduce the use of fossil fuels, and in addition to the primary advantage, they do not generate by-products from the use of energy, so they are gaining attention as a new energy source with eco-friendliness and high energy efficiency.

A pouch-type secondary battery may be generally manufactured by stacking or winding an electrode assembly including a positive electrode, a negative electrode and a separator interposed between the positive electrode and the negative electrode, placing it in a battery case of a pouch sheet, and injecting or filling an electrolyte solution.

The pouch-type secondary battery may have sealability by sealing both the upper and lower surfaces of the pouch sheet protruded along the periphery of the secondary battery. However, this sealing method may be viewed as a suitable method for thin secondary batteries but as the trend moves toward higher energy secondary batteries, thicker secondary batteries have areas of 3-dimensional structure where sealing is required, so when sealing through the existing sealing method, it is difficult to ensure sealability of the side portion and the edge portion.

There is a need for development of technology for solving the above-described problem.

The above-described background was possessed or obtained by the inventors in the conception of the present disclosure, and is not necessarily known technology that was publicly available before filing the application.

### SUMMARY

### TECHNICAL PROBLEM

The present disclosure is designed to solve the above-described problem, and
an object according to an embodiment of the present disclosure is to provide a sealing apparatus for efficiently sealing the sealing surfaces and edges between the sealing surfaces.

An object according to an embodiment of the present disclosure is to provide a sealing apparatus for improving the sealing quality of an edge area of an outer packaging.

### TECHNICAL SOLUTION

A sealing apparatus according to an embodiment of the present disclosure may be configured to seal a secondary battery including an electrode assembly, an outer packaging having an internal space for accommodating the electrode assembly and an outer packaging opening through which the internal space is in communication with an outside, and a cover member configured to sealably cover the outer packaging opening of the outer packaging, wherein the sealing apparatus seals the outer packaging and the cover member of the secondary battery, and may include an edge sealing unit configured to seal a plurality of edge between adjacent sealing surfaces among a plurality of sealing surfaces of the outer packaging.

The edge sealing unit may include at least one edge sealing block having a bent shape to conform to a shape of the edge.

The edge sealing block may be configured to operate in a diagonal direction that is oblique to the sealing surface.

The edge sealing unit may further include a support frame configured to support the secondary battery in response to operation of the edge sealing block.

The support frame may be disposed opposite the edge sealing block with the secondary battery positioned therebetween.

The edge sealing block may include a plurality of edge sealing blocks corresponding to a number of edges of the secondary battery.

The plurality of edge sealing blocks may operate simultaneously in a direction toward a center of the secondary battery.

The edge sealing block may have an L shape.

At least part of an inner surface of the edge sealing block that contacts the edge of the secondary battery may have a curved surface.

The edge sealing unit may further include an elastic pad that overlaps an inner surface of the edge sealing block to allow a close contact with the edge.

The sealing apparatus may further include a sealing surface sealing unit configured to seal the sealing surface while in contact with the sealing surface in a direction perpendicular to the sealing surface.

The sealing surface sealing unit may not overlap with the edge of the outer packaging.

A secondary battery sealing method according to the present disclosure may be used to seal a secondary battery including a plurality of sealing surfaces and a plurality of edges between the adjacent sealing surfaces, and may include a sealing surface sealing step of sealing the sealing surface by operation of a sealing surface sealing unit configured to seal the sealing surface while in contact with the sealing surface, and an edge sealing step, performed after the sealing surface sealing step, to seal the edge by operation of an edge sealing unit including a plurality of edge sealing blocks having a bent shape to conform to a shape of the edge.

The edge sealing step may include sequentially sealing four edges of the secondary battery by the single edge sealing block.

The edge sealing step may be simultaneously performed on four edges of the secondary battery by the plurality of edge sealing blocks.

### ADVANTAGEOUS EFFECTS

The sealing apparatus according to an embodiment of the present disclosure may efficiently seal the sealing surfaces and edges between the sealing surfaces.

The sealing apparatus according to an embodiment of the present disclosure may improve the sealing quality of the edge area of the outer packaging.

Besides, the effects of the present disclosure may include effects that can be easily predicted by those skilled in the art from the embodiments of the present disclosure.

### BRIEF DESCRIPTION OF THE DRAWINGS

FIG. 1 is an exploded perspective view of a secondary battery to be sealed by a sealing apparatus according to Embodiment 1 of the present disclosure.
FIG. 2 is a schematic perspective view of an assembled secondary battery.
FIG. 3 is a perspective view showing that a pair of sealing surfaces facing each other are sealed by a sealing surface sealing portion.
FIG. 4 is a perspective view showing that another pair of sealing surfaces are sealed by a sealing surface sealing portion.
FIG. 5 is a perspective view showing the operation of a support frame and an edge sealing block of an edge sealing portion.
FIG. 6 is a perspective view showing an elastic pad attached to an inner surface of an edge sealing block.
FIG. 7 is a perspective view showing the operation of a sealing apparatus according to Embodiment 2 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. The following description is one of aspects of the embodiments, and in describing an embodiment, a certain detailed description of known functions or elements is omitted for clarity of description of the present disclosure.

In affixing the reference numerals to the elements in each drawing, the identical or similar reference numerals are affixed to the identical or similar elements throughout the specification. An element including a shared function with an element included in any one embodiment will be described using the same name in other embodiment. The terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

Additionally, the present disclosure is not limited to the above-described embodiments, and a variety of modifications and changes may be made thereto by persons having ordinary skill in the technical field pertaining to the present disclosure from this disclosure. Therefore, the aspect of the present disclosure should not be limited to the disclosed embodiments, and it should be understood that the appended claims and their equal or equivalent variations fall within the scope of the present disclosure.

### Embodiment 1

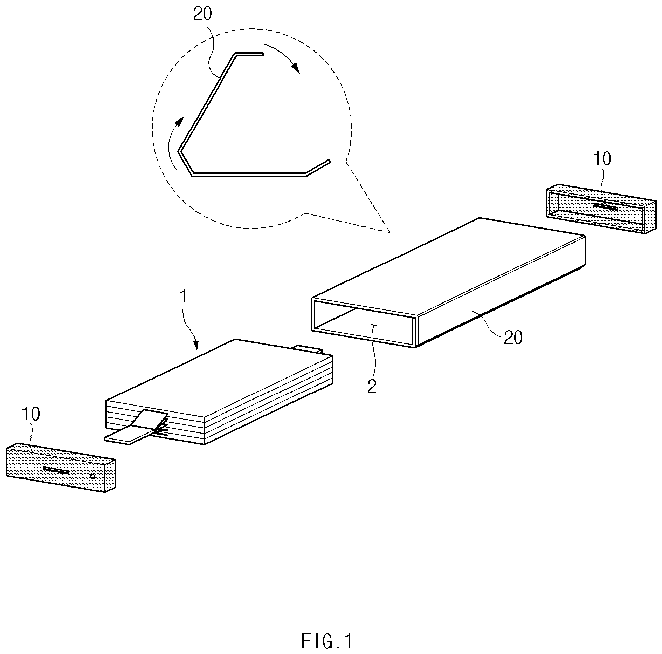

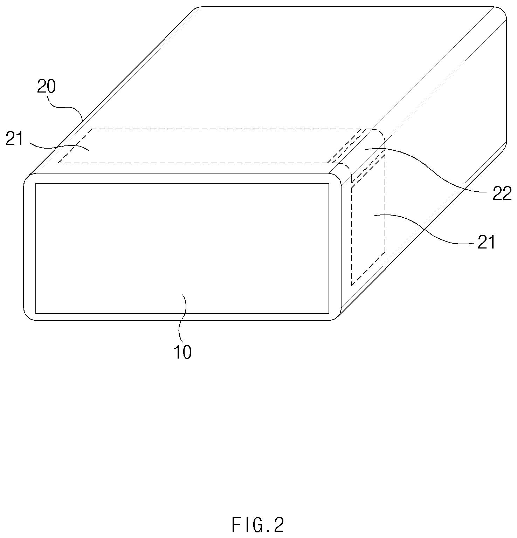

FIGS. 1 and 2 show a secondary battery to be sealed by a sealing apparatus according to Embodiment 1 of the present disclosure. FIG. 1 is an exploded perspective view of the secondary battery to be sealed by the sealing apparatus according to Embodiment 1 of the present disclosure. FIG. 2 is a schematic perspective view of the assembled secondary battery.

Referring to FIG. 1, the secondary battery to be sealed by the sealing apparatus according to Embodiment 1 of the present disclosure may include an electrode assembly 1, an outer packaging 20 and a cover member 10.

### Electrode assembly 1

The electrode assembly 1 may be manufactured by stacking a positive electrode, a negative electrode and a separator in a preset arrangement, and may have a rectangular shape having a length direction.

The electrode assembly 1 may have an electrode tab at two end portions. The electrode assembly 1 may have a plurality of positive electrode tabs joined to each other at one end portion and a plurality of negative electrode tabs joined to each other at the other end portion in the length direction of the electrode assembly 1.

### Outer packaging 20

The outer packaging 20 may be configured to accommodate the electrode assembly 1. The outer packaging 20 may have an internal space for accommodating the electrode assembly 1 and an outer packaging opening 2 through which the internal space is in communication with the outside.

The outer packaging 20 may be formed by rolling or folding a film-shaped outer packaging sheet. The outer packaging sheet of which the outer packaging is made may be a sheet including a metal layer of aluminum or stainless steel. The outer packaging sheet may be a laminated sheet further including a resin layer laminated on the metal layer.

The outer packaging 20 having the outer packaging openings 2 at two end portions may be obtained by rolling or folding the film-shaped outer packaging sheet such that the two ends meet, and bonding the two overlapped ends with an adhesive or joining them through a hot melt process. The outer packaging openings 2 may be present at two end portions in the length direction of the electrode assembly 1 accommodated in the outer packaging 20.

### Cover member 10

The cover member 10 may be the component that covers the outer packaging opening 2 of the outer packaging 20. To prevent leakage of an electrolyte solution filled in the internal space of the outer packaging 20 accommodating the electrode assembly 1, the cover member 10 may seal the outer packaging opening 2 of the outer packaging 20. When the cover member 10 is coupled to the two end portions of the outer packaging 20 in the length direction and sealed with the outer packaging 20 by the sealing apparatus according to the present disclosure, the cover member 10 may seal the outer packaging opening 2 of the outer packaging 20. The cover member 10 may include a pair of cover members 10 corresponding to the outer packaging openings 2. The cover member 10 may be formed in a rectangular shape to conform to the shape of the outer packaging opening 2.

Referring to FIG. 2, the outer packaging 20 accommodating the electrode assembly 1 therein may be covered by the cover member 10. The outer packaging 20 combined with the cover member 10 may be sealed with the cover member 10. The outer packaging 20 may include a sealing surface 21 and an edge 22.

### Sealing surface 21 and edge 22

The sealing surface 21 of the outer packaging 20 may include a plurality of sealing surfaces 21. As illustrated, when the cover member 10 has the rectangular shape, the outer packaging 20 may have four sealing surfaces along the circumferential direction of the cover member 10.

The edge 22 may be formed between two adjacent sealing surfaces 21. The edge 22 of the outer packaging 20 may include a plurality of edges 22, and for example, when the cover member 10 has the rectangular shape, the outer packaging 20 may have four edges 22 corresponding to four corners of the rectangular cover member 10. As described above, because the outer packaging 20 includes the resin layer (for example, polypropylene (PP), polyethylene terephthalate (PET), etc.) and is formed by folding or rolling, the edge 22 of the outer packaging 20 may be formed in a round shape with a predetermined curvature.

### Sealing surface sealing unit 100

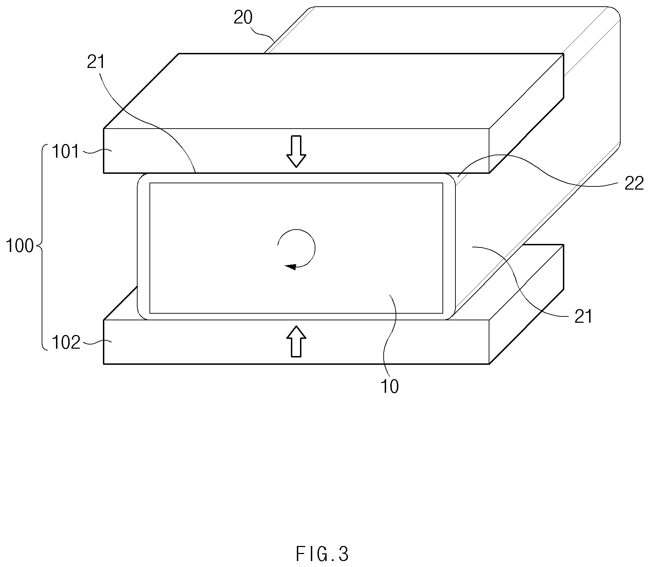

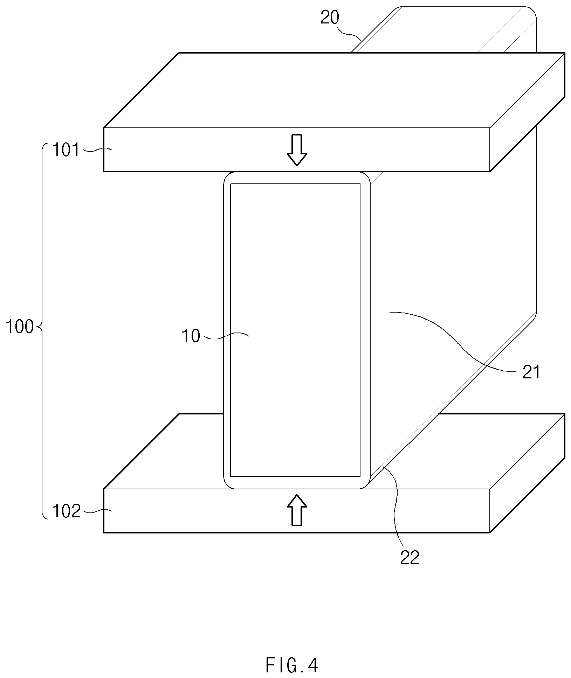

FIGS. 3 and 4 show a sealing surface sealing unit 100 of the sealing apparatus according to Embodiment 1 of the present disclosure. FIG. 3 is a perspective view showing that a pair of sealing surfaces 21 facing each other are sealed by the sealing surface sealing unit 100. FIG. 4 is a perspective view showing that another pair of sealing surfaces 21 are sealed by the sealing surface sealing unit 100.

Referring to FIGS. 3 and 4, the sealing surface 21 of the outer packaging 20 may be sealed by the sealing surface sealing unit 100. The sealing surface sealing unit 100 may include a pair of sealing blocks facing each other. The sealing block of the sealing surface sealing unit 100 while in contact with the sealing surface 21 of the outer packaging 20 may apply heat and pressure to the sealing surface 21.

The sealing surface sealing unit 100 may include, for example, a first sealing block 101 disposed on one side of the outer packaging 20, and a second sealing block 102 disposed on the other side of the outer packaging 20 with the outer packaging 20 interposed therebetween such that the first sealing block 101 and the second sealing block 102 face each other. The first sealing block 101 and the second sealing block 102 may be disposed parallel to each other, facing each other.

The first sealing block 101 and the second sealing block 102 facing each other may operate in a direction toward each other. The first sealing block 101 and the second sealing block 102 may operate in a direction perpendicular to the sealing surface 21 to be sealed.

The sealing surface sealing unit 100 may simultaneously seal a pair of sealing surfaces facing each other among the plurality of sealing surfaces 21 formed along the outer peripheral surface of the outer packaging 20. Subsequently, the outer packaging 20 may be, for example, rotated in a direction (see FIG. 3), to perform sealing of another pair of unsealed sealing surfaces 21 by the sealing surface sealing unit 100 in the same way. In this case, the area of the sealing surface 21 sealed by the sealing surface sealing unit 100 may not overlap with the edge 22 area where sealing is performed by an edge sealing unit as described below. In other words, as the sealing block of the sealing surface sealing unit 100 does not overlap with the edge 22 area of the outer packaging 20, it may be possible to prevent double sealing by the sealing surface sealing unit 100 and the edge sealing unit as described below.

### Edge sealing unit 200

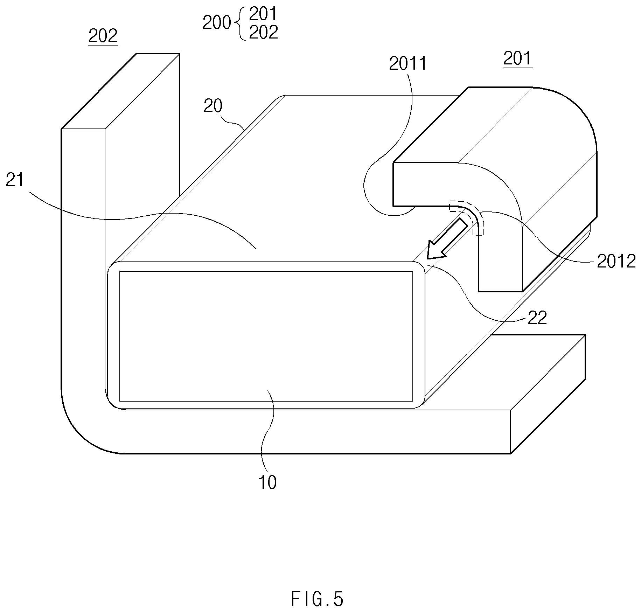

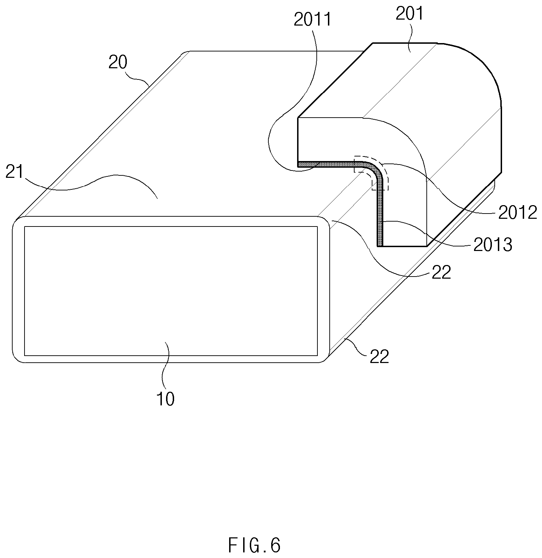

FIGS. 5 and 6 show the edge sealing unit 200 of the sealing apparatus according to Embodiment 1 of the present disclosure. FIG. 5 is a perspective view showing the operation of a support frame 202 and an edge sealing block 201 of the edge sealing unit 200. FIG. 6 is a perspective view showing an elastic pad 2013 attached to the inner surface of the edge sealing block 201.

Referring to FIG. 5, the edge sealing unit 200 of the sealing apparatus according to Embodiment 1 of the present disclosure may be configured to seal the edge 22 of the outer packaging 20. The sealing surface sealing unit 100 and the edge sealing unit 200 may operate independently. Preferably, the sealing of the edge 22 of the outer packaging 20 by the edge sealing unit 200 may be performed after the sealing of the sealing surface 21 of the outer packaging 20 by the sealing surface sealing unit 100, but is not limited thereto.

### Edge sealing block 201

The edge sealing unit 200 may include the edge sealing block 201 configured to perform edge sealing while in contact with the edge 22 of the outer packaging 20. The edge sealing block 201 may seal the cover member 10 and the edge 22 of the outer packaging 20 by applying pressure and heat to the edge 22 of the outer packaging 20.

The edge sealing block 201 may have a bent shape to conform to the shape of the edge 22 of the outer packaging 20. For example, the edge sealing block 201 may have an L shape as a whole.

The edge 22 of the outer packaging 20 may be pressed in contact with an inner surface 2011 of the edge sealing block 201. The inner surface 2011 of the edge sealing block 201 may be formed in a shape that conforms to the shape of the outer peripheral surface of the outer packaging 20. For example, the inner surface 2011 of the edge sealing block 201 may include a curved surface 2012 having a predetermined curvature to conform to the edge 22 of the outer packaging 20. By adopting the shape of the curved surface 2012, the edge 22 of the outer packaging 20 may be pressed without a gap by the closer contact of the inner surface of the edge sealing block 201 and the edge 22.

The edge sealing block 201 may operate in a diagonal direction that is oblique to the sealing surface 21. The operation direction of the edge sealing block 201 may be, for example, a direction toward the center of the cover member 10 having the rectangular shape.

### Support Frame 202

The edge sealing unit 200 may further include the support frame 202. The support frame 202 may be configured to support the secondary battery against the edge sealing block 201 operated to apply pressure to the secondary battery in the diagonal direction. The support frame 202 may be disposed opposite the edge sealing block 201 with the secondary battery positioned between them. The support frame 202 may in contact with and support at least one of the plurality of sealing surfaces of the outer packaging 20. The support frame 202 may be, for example, formed in a bent shape along the outer peripheral surface of the outer packaging 20 of the secondary battery to support two adjacent sealing surfaces of the outer packaging 20. In this case, the support frame 202 may have an L shape in the same way as the edge sealing block 201.

The edge sealing block 201 may be configured to seal one edge 22 of the outer packaging 20 of the secondary battery and in turn, seal the remaining edges in a sequential order. In this case, in response to the operation of the edge sealing block 201, the support frame 202 disposed opposite the edge sealing block 201 may support the secondary battery.

### Elastic pad 2013

Referring to FIG. 6, the elastic pad 2013 may be present on the inner surface 2011 of the edge sealing block 201 that contacts the edge 22 of the outer packaging 20. The elastic pad 2013 may be made of an elastic material (for example, rubber, silicone, urethane, etc.) and may overlap the inner surface 2011 of the edge sealing block 201 to a predetermined thickness.

When the elastic pad 2013 overlaps the inner surface 2011 of the edge sealing block 201 that applies pressure to the edge 22 of the outer packaging 20, the edge 22 of the outer packaging 20 may be pressed close without a gap, and the sealing quality of the edge 22 may be improved. In addition, efficient sealing may be achieved by proper shape changes of the elastic pad 2013 even when the curvature of the curved surface 2013 area of the inner surface 2011 of the edge sealing block 201 does not perfectly match the shape of the edge 22 of the outer packaging 20.

### Embodiment 2

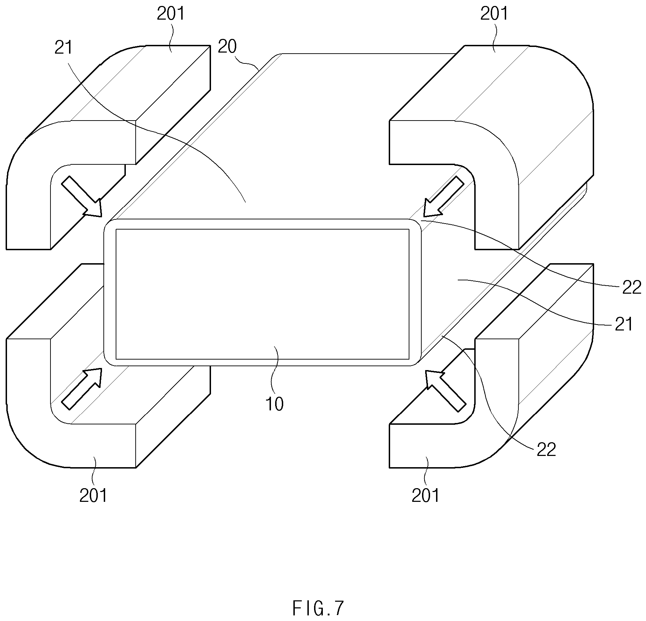

FIG. 7 is a perspective view showing the operation of the sealing apparatus according to Embodiment 2 of the present disclosure.

Embodiment 2 of the present disclosure may be different from Embodiment 1 in that a plurality of edge sealing blocks 201 corresponding to the plurality of edges 22 of the outer packaging 20 are included. Except the difference, it should be noted that the foregoing description of the sealing apparatus according to Embodiment 1 of the present disclosure may be equally applied to Embodiment 2, and accordingly, the description that is shared with Embodiment 1 is omitted, and Embodiment 2 will be described based on the differences from Embodiment 1.

Referring to FIG. 7, the sealing apparatus according to embodiment 2 of the present disclosure may include the plurality of edge sealing blocks 201 corresponding to the plurality of edges 22 of the outer packaging 20. For example, when the cover member 10 is formed in a rectangular shape, the sealing apparatus may include four edge sealing blocks 201 corresponding to four edges 22, respectively.

In this case, the four edge sealing blocks 201 may simultaneously operate to simultaneously seal the plurality of edges 22 of the outer packaging 20. Each edge sealing block 201 may operate in a diagonal direction toward the center of the secondary battery. In this case, because one edge sealing block 201 and its opposite edge sealing block 201 operate in the opposite directions, there may be no need for a support frame to support the secondary battery against the edge sealing block 201, and further, it may be possible to reduce the time required for the sealing process, thereby increasing process efficiency.

### Sealing method

The sealing method of the secondary battery according to the present disclosure may be used to seal the secondary battery including the plurality of sealing surfaces and the plurality of edges between the adjacent sealing surfaces.

The sealing method of the secondary battery according to the present disclosure may be performed through the components of the present disclosure described above. The sealing method of the secondary battery according to the present disclosure may include a sealing surface sealing step and an edge sealing step.

The sealing surface sealing step may be a step of sealing the sealing surface of the outer packaging by the operation of the sealing surface sealing unit, and the edge sealing step may be a step of sealing the edge of the outer packaging between the sealing surfaces by the operation of the edge sealing unit. The sealing process of the sealing surface and the edge of the outer packaging is as described above.

In this instance, the edge sealing step may be performed by sequentially sealing the four edges of the secondary battery by a single edge sealing block, or may be performed by simultaneously sealing the four edges of the secondary battery by a plurality of edge sealing blocks.

The sealing surface sealing step may be performed before the edge sealing step, but is not limited thereto, and the sealing surface sealing step may be performed after the edge sealing step.

The edge and the sealing surface of the outer packaging sealed in the edge sealing step and the sealing surface sealing step, respectively, may be areas that do not overlap each other.

Although the present disclosure has been hereinabove described with regard to a limited number of embodiments and drawings, the foregoing description is provided to describe the technical aspect of the present disclosure by way of example, and a variety of modifications and change may be made thereto by persons having ordinary skill in the technical field pertaining to the present disclosure without departing from the essential features of the present disclosure.

Therefore, the disclosed embodiments of the present disclosure are provided to describe the technical aspect of the present disclosure but not intended to be limiting, and the technical scope of the present disclosure is not limited by these embodiments. The scope of protection of the present disclosure should be interpreted by the appended claims, and it should be interpreted that all technical aspects in the equivalent scope are included in the scope of protection of the present disclosure.

### [List of Reference Numerals]

1: Electrode assembly
2: Outer packaging opening
10: Cover member
20: Outer packaging
21: Sealing surface
22: Edge
100: Sealing surface sealing unit
101: First sealing block
102: Second sealing block
200: Edge sealing unit
201: Edge sealing block
2011: Inner surface
2012: Curved surface
2013: Elastic pad
202: Support frame

## Claims

1. A sealing apparatus for sealing a secondary battery including an electrode assembly; an outer packaging having an internal space for accommodating the electrode assembly and an outer packaging opening through which the internal space is in communication with an outside; and a cover member configured to sealably cover the outer packaging opening of the outer packaging, wherein the sealing apparatus is configured to seal the outer packaging and the cover member of the secondary battery, the sealing apparatus comprising:
an edge sealing unit configured to seal an edge between adjacent sealing surfaces among a plurality of sealing surfaces located on different planes of the outer packaging.

2. The sealing apparatus according to claim 1,
wherein the edge sealing unit includes:
at least one edge sealing block having a bent shape to conform to a shape of the edge.

3. The sealing apparatus according to claim 2,
wherein the edge sealing block is configured to operate in a diagonal direction that is oblique to the sealing surface.

4. The sealing apparatus according to claim 2,
wherein the edge sealing unit further includes a support frame configured to support the secondary battery in response to operation of the edge sealing block.

5. The sealing apparatus according to claim 4,
wherein the support frame is disposed opposite the edge sealing block with the secondary battery positioned therebetween.

6. The sealing apparatus according to claim 2,
wherein the edge sealing block includes a plurality of edge sealing blocks corresponding to a number of edges of the secondary battery.

7. The sealing apparatus according to claim 6,
wherein the plurality of edge sealing blocks operates simultaneously in a direction toward a center of the secondary battery.

8. The sealing apparatus according to claim 2,
wherein the edge sealing block has an L shape.

9. The sealing apparatus according to claim 8,
wherein at least part of an inner surface of the edge sealing block that contacts the edge of the secondary battery has a curved surface.

10. The sealing apparatus according to claim 8,
wherein the edge sealing unit further includes an elastic pad that overlaps an inner surface of the edge sealing block to allow a close contact with the edge.

11. The sealing apparatus according to claim 1, further comprising:
a sealing surface sealing unit configured to seal the sealing surface while in contact with the sealing surface in a direction perpendicular to the sealing surface.

12. The sealing apparatus according to claim 11,
wherein the sealing surface sealing unit does not overlap with the edge of the outer packaging.

13. A secondary battery sealing method for sealing a secondary battery including a plurality of sealing surfaces and a plurality of edges between the adjacent sealing surfaces, the secondary battery sealing method comprising:
a sealing surface sealing step of sealing the sealing surface by operation of a sealing surface sealing unit configured to seal the sealing surface while in contact with the sealing surface; and
an edge sealing step, performed after the sealing surface sealing step, to seal the edge by operation of an edge sealing unit including a plurality of edge sealing blocks having a bent shape to conform to a shape of the edge.

14. The secondary battery sealing method according to claim 13,
wherein the edge sealing step includes sequentially sealing four edges of the secondary battery by one of the edge sealing block.

15. The secondary battery sealing method according to claim 13,
wherein the edge sealing step is simultaneously performed on four edges of the secondary battery by the plurality of edge sealing blocks.
